# DEMANDE DE BREVET EUROPEEN

(11) **EP 1 887 774 A1**
(43) Date de publication de la demande: **13.02.2008**
(21) Numéro de dépôt: 06291276.1
(22) Date de dépôt: 07.08.2006
(51) Int. Cl.: H04M 7/00, H04L 12/56

(54) **Dispositif de routage pour un système de téléphonie sur IP**

(71) Demandeur: Inria Institut National de Recherche en Informatique et en Automatique, 78153 Le Chesnay Cedex (FR); Ecole Nationale Supérieure d'Electronique, Informatique et Radiocommunications de Bordeaux, 33402 Talence Cedex (FR)
(72) Inventeur: Burgy Laurent, 21, rue jean Moulin-33610 Gazinet cestas (FR); Consel Charles, 33130 Begles (FR); Latry Fabien, 33600 Pessac (FR); Palix Nicolas, 33800 Bordeaux (FR); Reveillere Laurent, 33200 Bordeaux (FR)
(74) Mandataire: Plaçais, Jean Yves

(57) **Abrégé**

Un dispositif (D) est dédié à l'interconnexion entre au moins un système d'informations d'entreprise(s) (S11-S13) et un serveur d'applications (SA) stockant des données de politique représentatives d'au moins une politique de routage agencée sous la forme d'une arborescence dont chaque noeud est un prédicat visant au moins une caractéristique d'un appel ou au moins un élément relatif à un contact, et dont chaque feuille terminale est une décision de routage d'un appel visant au moins un contact, et appartenant à un système de téléphonie sur IP comprenant en outre un serveur de signalisation (SS). Ce dispositif (D) comprend i) une base de contacts (BC) stockant des données extraites du système d'informations (Sll-S13) et représentatives d'une liste de contacts associés chacun à au moins un identifiant de contact et au moins un paramètre de contact, chaque identifiant et chaque paramètre constituant un élément d'un contact, et ii) des moyens de gestion (MG) chargés, en cas de sollicitation par le serveur d'applications (SA) au moyen d'un identifiant de contact désigné par un appel, de parcourir une arborescence du serveur d'applications en appliquant successivement ses prédicats compte tenu des éléments stockés dans la base de contacts (BC) et d'informations propres au système de téléphonie sur IP, jusqu'à trouver, pour le serveur de signalisation (SS), une décision de routage pour l'appel.

## Description

L'invention concerne le domaine de la téléphonie, et en particulier les services de téléphonie sur IP (« Internet Protocol » - Protocole Internet) relatifs au « routage » d'appels au sein d'une entreprise ou d'une administration, ou d'un ensemble d'entreprises ou d'administrations.

On entend ici par « routage d'appel » aussi bien un routage d'appel téléphonique qu'un routage de paquets ou un routage de message électronique (par exemple de type courriel (ou « e-mail »)).

Les services de téléphonie sur IP dédiés au routage d'appels sont de plus en plus utilisés dans les entreprises ou les administrations du fait qu'ils permettent de définir des comportements génériques à adopter qui facilitent la gestion des appels, et qu'ils peuvent dans certains cas aider leurs utilisateurs à définir leurs propres politiques de traitement d'appels. De nombreuses solutions, matérielles ou logicielles, permettent la mise en oeuvre de ces routages d'appels. Mais, ces solutions sont généralement génériques, difficilement configurables, et n'utilisent que très partiellement les informations qui sont contenues dans le système d'informations de l'entreprise. Plus précisément, ces solutions permettent d'utiliser des informations du système d'informations, comme par exemple des fiches ou des numéros de téléphone simplifiés, mais ni de raisonner sur ces informations, ni de prendre en compte ces informations dans le processus de routage d'un appel.

Il a ainsi été proposé d'extraire des informations utiles d'un système d'informations, afin de les stocker dans une « base de contacts » selon une représentation uniforme, puis de paramétrer le processus de routage d'appels en fonction de ces informations stockées. Le processus de routage peut ainsi déterminer pour chaque appel une décision de routage en fonction des données issues du système d'informations. Cependant, les informations contenues dans la base de contacts évoluent en permanence, du fait de l'évolution même du contenu du système d'informations, et ne sont pas représentatives ou dépendantes des informations propres au système de téléphonie (par exemple un contact d'une entreprise peut bénéficier d'un crédit d'assistance en ligne (ou « hotline ») consistant en un nombre d'appels prédéfini, décrémenté après chaque appel, ou bien un contact associé à un contrat ayant une date d'échéance peut être routé prioritairement jusqu'à cette date d'échéance).

La prise en compte de l'évolution du système d'informations de l'entreprise peut être effectuée au niveau de l'interface entre la « base de contacts » et le système d'informations, mais il ne peut en être de même des informations qui sont « réactives » au système de téléphonie (c'est-à-dire qui en dépendent). En effet, cette évolution est indépendante du système d'informations et doit donc être traitée par le système de téléphonie.

L'invention a donc pour but d'améliorer la situation, et notamment d'assurer une interconnexion entre un système de téléphonie sur IP et au moins un système d'informations d'entreprise(s) ou d'administration(s) afin d'utiliser dans le processus de routage d'appels non seulement des informations du système d'informations indépendantes du système de téléphonie, mais également des informations du système d'informations dépendantes du système de téléphonie.

Elle propose à cet effet un dispositif destiné à interconnecter un système d'informations d'entreprise et un serveur d'applications stockant des données de politique représentatives d'au moins une politique de routage agencée sous la forme d'une arborescence (ou arbre de décision) dont chaque noeud est un prédicat visant au moins une caractéristique d'un appel (reçu ou émis) ou au moins un élément relatif à un contact, et dont chaque feuille terminale est une décision de routage d'un appel visant au moins un contact, et appartenant à un système de téléphonie sur IP comprenant en outre un serveur de signalisation.

Ce dispositif se caractérise par le fait qu'il comprend:
- une base de contacts chargée de stocker des données extraites du système d'informations et représentatives d'une liste de contacts associés chacun à au moins un identifiant de contact et au moins un paramètre de contact, chaque identifiant et chaque paramètre constituant un élément d'un contact,
- des moyens de gestion chargés, lorsqu'ils sont sollicités par le serveur d'applications au moyen d'un identifiant de contact désigné par un appel (reçu ou émis), de parcourir une arborescence d'une politique de routage du serveur d'applications en appliquant successivement chacun de ses prédicats compte tenu des éléments qui sont stockés dans la base de contacts et d'informations propres au système de téléphonie sur IP, jusqu'à trouver, pour le serveur de signalisation, une décision de routage pour l'appel (reçu ou émis).

Le dispositif selon l'invention peut comporter d'autres caractéristiques qui peuvent être prises séparément ou en combinaison, et notamment :
- il peut comprendre des moyens de conversion chargés de convertir des données d'information, relatives aux contacts et issues du système d'informations, en données d'élément propres à être stockées dans la base de contacts ;
- il peut comprendre des moyens d'adaptation chargés de transformer les données de politique qui représentent l'arborescence à parcourir en données secondaires selon un format correspondant au format des données d'élément ;
- il peut comprendre des moyens de vérification chargés de vérifier la cohérence des données de politique par rapport aux données d'élément qui sont stockées dans la base de contacts, et de générer une alarme en cas de détection d'une incohérence ;
- chaque paramètre est par exemple un identifiant d'appartenance à un groupe d'au moins un contact, ou bien un attribut défini par un identifiant et une valeur ;
   ➢ la valeur de chaque attribut peut par exemple être soit indépendante du système de téléphonie sur IP, soit dépendante de ce dernier ;
      - un attribut à valeur dépendante du système de téléphonie sur IP peut être en outre associé soit à un compteur soit à une date d'échéance ;
         • ses moyens de gestion peuvent être chargés, en cas d'application d'un prédicat relatif à un attribut associé à un compteur présentant une valeur en cours définie par une information du système de téléphonie sur IP, de comparer la valeur en cours à un seuil choisi, et soit d'utiliser la valeur de cet attribut et de mettre à jour le compteur lorsque la valeur en cours du compteur est supérieure ou égale (respectivement inférieure) au seuil choisi, soit de supprimer la valeur de cet attribut dans la base de contacts lorsque la valeur en cours du compteur est inférieure (respectivement supérieure ou égale) au seuil choisi ;
         • ses moyens de gestion peuvent être chargés, en cas d'application d'un prédicat relatif à un attribut associé à une date d'échéance définie par une information du système de téléphonie sur IP, de comparer la date en cours à la date d'échéance, et soit d'utiliser la valeur de cet attribut lorsque la date en cours est antérieure ou égale à la date d'échéance, soit de supprimer la valeur de cet attribut dans la base de contacts lorsque la date en cours est postérieure à la date d'échéance.

L'invention propose également un serveur d'applications, faisant partie d'un système de téléphonie sur IP comprenant en outre un serveur de signalisation, et équipé d'un dispositif d'interconnexion du type de celui présenté ci-avant et couplé au serveur de signalisation.

L'invention propose également une plateforme de téléphonie sur IP, pour un système de téléphonie sur IP, comprenant un serveur de signalisation couplé à un serveur d'applications du type de celui présenté ci-avant.

L'invention est particulièrement bien adaptée, bien que de façon non exclusive, aux systèmes de téléphonie sur IP dans lesquels le serveur de signalisation utilise le protocole de signalisation SIP (pour « Session Initiation Protocol ») ou H323.

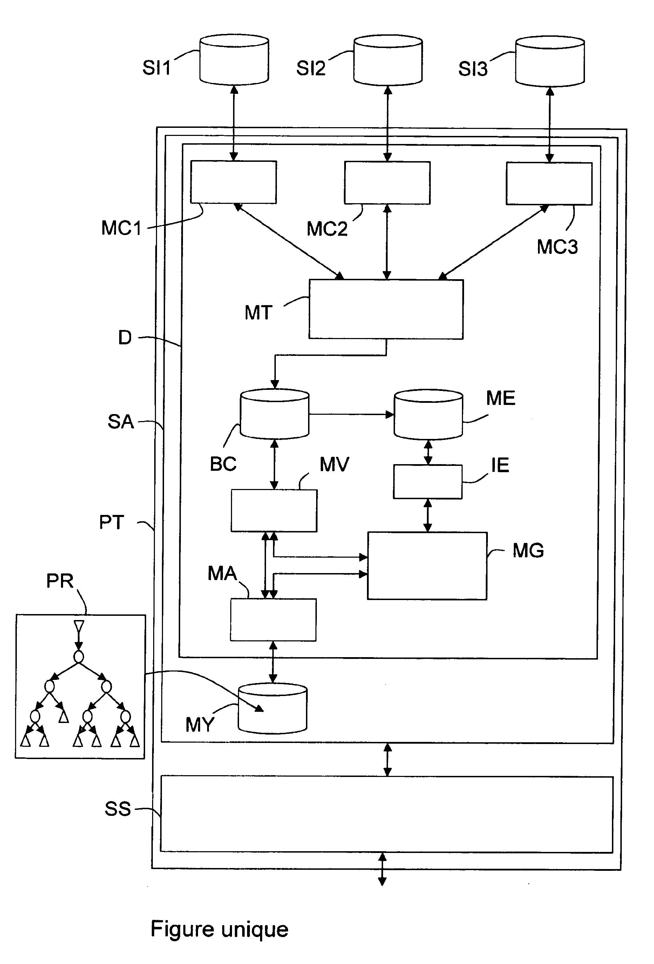

D'autres caractéristiques et avantages de l'invention apparaîtront à l'examen de la description détaillée ci-après, et du dessin annexé, sur lequel l'unique figure illustre de façon très schématique une plateforme de téléphonie sur IP équipée d'un exemple de réalisation d'un dispositif d'interconnexion selon l'invention, couplé à des systèmes d'informations d'une entreprise. Le dessin annexé pourra non seulement servir à compléter l'invention, mais aussi contribuer à sa définition, le cas échéant.

L'invention a pour objet de permettre l'interconnexion entre un système de téléphonie sur IP (« Internet Protocol ») et un système d'informations d'entreprise(s) ou d'administration(s) dans le but de permettre l'utilisation dans le processus de routage d'appels des informations du système d'informations qui sont aussi bien indépendantes du système de téléphonie sur IP que dépendantes de ce dernier.

Dans ce qui suit, on considère à titre d'exemple non limitatif le cas d'un système de téléphonie sur IP comprenant une plateforme de téléphonie sur IP chargée de router des appels téléphoniques au sein d'une entreprise disposant de systèmes d'informations. Mais, l'invention n'est limitée ni au routage de ce type d'appels, ni au routage d'appels au sein d'une unique entreprise. Elle concerne en effet tout système de téléphonie sur IP permettant d'offrir à une ou plusieurs entreprises ou administrations des services de routage d'appels, qu'il s'agisse d'appels téléphoniques ou de paquets ou de messages électroniques (par exemple de type courriel (ou « e-mail »)).

Comme cela est schématiquement illustré sur l'unique figure, la mise en oeuvre de l'invention requiert une plateforme de téléphonie sur IP PT, et au moins un système d'informations Sli. Dans cet exemple, on a représenté trois systèmes d'informations Sl1 à Sl3 (i = 1 à 3), mais le nombre de systèmes d'informations doit être au moins égal à un (1).

Les sources d'informations peuvent être très différentes et les représentations des informations au sein des différents systèmes d'informations Sli peuvent être éventuellement hétérogènes. On notera qu'un unique système d'informations peut également stocker des informations issues de sources différentes. Par exemple, le premier système d'informations S11 peut être un logiciel de gestion de la relation client de type CRM (pour « Customer Relationship Management » - ou en français GRC pour « Gestion de la Relation Client »), le deuxième système d'informations S12 peut être un module de paye (base de données), et le troisième système d'informations S13 peut être un module de facturation (tableur).

Comme cela est schématiquement illustré sur l'unique figure, la plateforme (de téléphonie sur IP) PT est chargée de mettre en oeuvre des traitements de routage d'appels adaptés à l'entreprise. Cette plateforme PT comprend un serveur de signalisation SS et un serveur d'applications SA couplés l'un à l'autre. On considère dans ce qui suit, à titre d'exemple illustratif, non limitatif, que le serveur de signalisation SS utilise le protocole de signalisation SIP (pour « Session Initiation Protocol »). La nature ouverte d'une plateforme SIP PT (à serveur de signalisation utilisant le protocole de signalisation SIP) rend l'écriture des politiques de routage d'appels téléphoniques (sur lesquelles on reviendra plus loin) accessible à un large éventail de programmeurs, contrairement aux plateformes classiques qui sont généralement fermées et propriétaires.

Il est rappelé qu'une plateforme SIP PT est basée sur un modèle client-serveur. Son serveur de signalisation SIP SS est chargé d'effectuer les opérations relatives à la téléphonie, tandis que son serveur d'applications SA est chargé de la mise en oeuvre d'au moins une politique de routage d'appels PR.

Lorsque le système de téléphonie sur IP reçoit un appel téléphonique, il adresse un message SIP à son serveur de signalisation SIP SS. Ce dernier transmet alors une requête au serveur d'applications SA. Si la requête requiert un routage d'appel, le serveur d'applications SA utilise une politique de routage d'appels PR fonction des caractéristiques de la requête, afin de déterminer une décision de routage. Puis, le serveur d'applications SA traduit la décision de routage d'appel en un message SIP qu'il transmet au serveur de signalisation SIP SS afin qu'il le route vers chaque terminal de communication concerné. Le routage d'appel est en effet destiné à mettre en relation au moins deux interlocuteurs distants.

Chaque politique de routage d'appels PR correspond à des scripts textuels ou visuels qui peuvent être édités au moyen d'une interface graphique. Une politique de routage PR définit explicitement des règles de traitement d'appels, qui permettent de déterminer une décision de routage pour un appel (reçu ou émis). Les décisions de routage sont des actions de signalisation qui permettent de transférer ou rediriger ou encore rejeter un appel.

Comme cela est schématiquement illustré sur l'unique figure, une politique de routage d'appels PR se présente sous la forme d'une arborescence (ou arbre de décision) dont chaque noeud (o) est un prédicat, et dont chaque feuille terminale (Δ) est une décision de routage d'un appel visant au moins un contact.

On entend ici par « caractéristique d'un appel » une information désignant un appelant, ou un appelé, ou la date de l'appel, ou le sujet d'un appel, ou le type d'un appel (par exemple de type « longue distance »), par exemple.

On entend ici par « contact » une entité physique (comme par exemple une personne) ou une entité morale (comme par exemple une entreprise ou une administration).

On entend ici par « prédicat » au moins une règle ou au moins un test visant au moins une caractéristique d'un appel reçu ou émis ou au moins un élément relatif à un contact.

On entend ici par « élément relatif à un contact » un identifiant de contact, comme par exemple un numéro de téléphone fixe ou mobile, une adresse de courrier électronique (« e-mail »), ou un numéro de sécurité sociale, ou un paramètre de contact, comme par exemple un identifiant d'appartenance à un groupe d'au moins un contact, ou un attribut défini par au moins un identifiant (ou nom) et une valeur, comme par exemple une notification d'un contrat en cours avec le numéro de contrat correspondant.

On entend ici par « attribut » des données d'informations issues d'un système d'informations Sli et permettant de catégoriser des appels (notification d'un appel prioritaire, interrogation d'un crédit d'assistance en ligne (« hotline »), par exemple). Les attributs peuvent être soit de type fixe, soit de type variable. Un attribut de type fixe est un attribut dont la valeur est indépendante du système de téléphonie sur IP. Un attribut de type variable est un attribut dont la valeur est dépendante du système de téléphonie sur IP (ou réactive à ce dernier). On notera qu'un attribut de type variable est également associé à un compteur ou à une date d'échéance qui dépend directement du système de téléphonie sur IP.

Une politique de routage d'appels PR permet donc de router un appel en fonction non seulement de la ou des caractéristiques de cet appel, mais également du contexte de l'appel (élément(s) relatif(s) à au moins un contact désigné par l'appel) et issu(s) du système d'informations).

Les données de politique, qui représentent les politiques de routage d'appels PR à mettre en oeuvre, sont stockées dans une mémoire MY du serveur d'applications SA.

Afin de permettre l'interconnexion entre le(s) système(s) d'informations Sli et le serveur d'applications SA en vue de la prise de décisions de routage ainsi qu'éventuellement de la vérification de la cohérence de politique(s) de routage, on utilise un dispositif d'interconnexion D. Comme cela est illustré sur l'unique figure, ce dispositif d'interconnexion D fait préférentiellement partie intégrante du serveur d'applications SA. Mais, cela n'est pas une obligation. Il pourrait en effet être couplé au serveur d'applications SA, directement ou indirectement, l'important étant qu'il puisse accéder aux données de politique stockées dans la mémoire MY du serveur d'applications SA.

Le dispositif d'interconnexion D, selon l'invention, comprend au moins une base de contacts BC et un module d'exécution MG.

La base de contacts BC est chargée de stocker des données extraites du ou des systèmes d'informations Sli et représentatives d'une liste de contacts associés chacun à au moins un identifiant de contact et au moins un paramètre de contact (selon les définitions données ci-avant). Ce stockage se fait par exemple dans un format de type XML (pour « eXtended Markup Language »).

Comme cela est illustré à titre d'exemple non limitatif sur l'unique figure, le dispositif d'interconnexion D peut comprendre des moyens de conversion MCi chargés de convertir des données d'information, qui sont relatives aux contacts de l'entreprise et qui sont issues du ou des systèmes d'informations Sli, en données d'élément destinées à être stockées dans la base de contacts BC.

Comme cela est illustré à titre d'exemple non limitatif sur l'unique figure, ces moyens de conversion MCi se présentent par exemple sous la forme de modules de conversion (ou « pilotes ») MCi dédiés chacun à l'un des systèmes d'informations Sli. Dans ce cas, on prévoit autant de module de conversion MCi que de système d'informations Sli, chaque module de conversion MCi étant alors couplé à un système d'informations Sli.

Chaque module de conversion MCi est par exemple chargé d'accéder à son système d'informations Sli afin d'y extraire certaines données d'informations à convertir, en fonction d'instructions reçues, par exemple, du système d'informations Sli lui-même ou résultant d'une programmation.

Comme cela est illustré à titre d'exemple non limitatif sur l'unique figure, le dispositif d'interconnexion D peut également comporter un module de traitement MT, couplé aux modules de conversion MCi ainsi qu'à la base de contacts BC, et chargé de filtrer et/ou transformer et/ou agréger les données converties, en fonction d'instructions reçues, par exemple, du système d'informations Sli lui-même ou résultant d'une programmation, afin d'alimenter la base de contacts BC en données d'information présentant un format prédéfini, et donc manipulables par le module d'exécution MG.

Par ailleurs, les modules de conversion MCi ou le module de traitement MT sont/est de préférence chargé(s) de mettre à jour le contenu de la base de contacts BC en fonction de l'évolution des données d'information qui sont contenues dans le(s) système(s) d'informations Sli au(x)quel(s) il(s) sont/est couplé(s). En effet, il(s) sont/est le(s) seul(s) à connaître la ou les relations entre le contenu de la base de contacts BC et le système d'informations Sli auquel il(s) sont/est couplé(s). On notera cependant que les modules de conversion MCi ou le module de traitement MT ne sont/n'est chargé(s) que de la mise à jour des données d'information qui sont indépendantes du système de téléphonie sur IP. La mise à jour des données d'information qui sont dépendantes du système de téléphonie sur IP est assurée par le module d'exécution MG, comme on le verra plus loin.

On notera que les éléments relatifs à un contact, stockés dans la base de contacts BC, peuvent être complétés par des données d'information complémentaires comme par exemple le nom et/ou le prénom et/ou la photo du contact. Ces données d'information complémentaires ne sont utilisées que pour faciliter l'utilisation ou l'affichage, par exemple au moyen d'une interface graphique.

Le module d'exécution MG est chargé d'intervenir chaque fois qu'il est sollicité par le serveur d'applications SA au moyen d'un identifiant de contact désigné par un appel (reçu ou émis). Lorsqu'il est ainsi sollicité, il parcourt l'une des arborescences, dont les données de politique qui le représentent sont stockées dans la mémoire MY du serveur d'applications SA, en appliquant successivement ses prédicats compte tenu des éléments qui sont stockés dans la base de contacts BC et d'informations propres au système de téléphonie sur IP, jusqu'à trouver une décision de routage pour l'appel (reçu ou émis).

Lorsque le serveur d'applications SA stocke plusieurs politiques de routage, le module d'exécution MG sélectionne celle qui doit être parcourue en fonction du ou des services qui correspondent à l'appel (reçu ou émis).

On entend ici par « appliquer un prédicat » le fait d'appliquer à ce prédicat (règle ou test) la valeur de l'élément de contact auquel il correspond et qui est stockée dans la base de contacts BC. On comprendra qu'un élément de contact visé par un prédicat peut à un instant donné ne plus être stocké dans la base de contacts BC, suite à une mise à jour. De même, un élément de contact visé par un prédicat peut à un instant donné être stocké dans la base de contacts BC avec une valeur incompatible avec le prédicat, suite à une mise à jour. Dans les cas précités, le chemin qui est en train d'être parcouru par le module d'exécution MG est interrompu (il devient infaisable). Cela se produit par exemple lorsqu'un contact ou un groupe de contacts ne fait plus partie de la base de contacts BC, alors même que ce contact ou ce groupe est visé par un prédicat, ou bien lorsque la valeur d'un attribut est devenue nulle, alors même que le prédicat (ou test) ne porte que sur une valeur d'attribut non nulle. Comme on le verra plus loin, ces cas sont préférentiellement détectés par le module de vérification MV. Dans le cas où la stratégie de vérification n'est pas adéquate, le module d'exécution MG est par exemple configuré de manière à mettre en oeuvre une procédure adaptée à la situation d'incohérence rencontrée. Par exemple, on choisit de router l'appel vers le standard téléphonique de l'entreprise ou vers une messagerie.

Comme cela est illustré sur l'unique figure, le dispositif d'interconnexion D peut comporter un module d'adaptation MA afin de faciliter le travail du module d'exécution MG. Ce module d'adaptation MA est notamment chargé de transformer les données de politique (qui représentent l'arborescence à parcourir et qui sont stockées dans la mémoire MY du serveur d'applications SA) en données dites secondaires compatibles avec le format prédéfini des données d'élément (qui sont stockées dans la base de contacts BC).

Par ailleurs, afin de faciliter la consultation des données d'élément de la base de contacts BC, le dispositif d'interconnexion D peut comporter une mémoire ME dans laquelle le module d'exécution MG stocke une version « opérationnelle » de la base de contacts BC. Dans ce cas, le dispositif d'interconnexion D comporte également une interface IE, par exemple de type APl (pour « Application Programming Interface » - interface de programmation d'application), intercalée entre le module d'exécution MG et la mémoire ME (contenant la version opérationnelle de la base de contacts BC) et chargée de permettre au module d'exécution MG d'accéder aux données d'élément de la base de contacts opérationnelle stockées dans la mémoire ME.

On notera que lorsqu'un test (ou une règle) de prédicat porte sur une caractéristique de l'appel, le module d'exécution MG consulte le message SIP correspondant (reçu par son serveur d'applications SA) afin de prendre une décision. Par ailleurs, lorsqu'un test (ou une règle) de prédicat porte sur un élément de contact, dont les données représentatives sont stockées dans la base de contacts BC et sont issues d'un système d'informations Sli, le module d'exécution MG interroge tout d'abord la base de contacts BC afin de déterminer si cet élément s'y trouve stocké, et si c'est le cas il extrait l'identifiant de contact ou le paramètre de contact (identifiant d'appartenance à un groupe ou attribut défini par au moins un identifiant et une valeur) qu'il représente.

Plus précisément, si un test (ou une règle) de prédicat porte sur un attribut, le module d'exécution MG détermine s'il est de type variable ou fixe. Si l'attribut est de type fixe, il extrait sa valeur afin de l'utiliser dans le test. Si l'attribut est de type variable, il identifie le type de variabilité qui lui est associé : compteur ou date d'échéance.

Dans le cas d'une date d'échéance, le module d'exécution MG compare la date en cours à ladite date d'échéance. Deux cas peuvent alors survenir. Si la date en cours est antérieure ou égale à la date d'échéance, le module d'exécution MG récupère la valeur de l'attribut afin de l'utiliser dans le test. Si la date en cours est postérieure à la date d'échéance, le module d'exécution MG supprime la valeur de cet attribut dans la base de contacts BC (le test ne peut alors pas être effectué et le module d'exécution MG met en oeuvre une procédure adaptée à la situation d'incohérence rencontrée, comme indiqué précédemment).

Dans le cas d'un compteur présentant une valeur en cours, le module d'exécution MG compare ladite valeur en cours à un seuil choisi (par exemple égal à un (1)). Deux cas peuvent alors survenir. Si la valeur en cours du compteur est supérieure ou égale (respectivement inférieure) au seuil choisi, le module d'exécution MG utilise la valeur de l'attribut afin de l'utiliser dans le test et met à jour le compteur (en l'incrémentant ou en le décrémentant). Par exemple, le test (ou prédicat) consiste à vérifier que l'attribut variable mis à jour est toujours valide (cela peut se faire en le comparant à un seuil prédéfini, par exemple). Si la valeur en cours du compteur est inférieure (respectivement supérieure ou égale) au seuil choisi, le module d'exécution MG supprime la valeur de l'attribut dans la base de contacts BC (le test ne peut alors pas être effectué et le module d'exécution MG peut mettre en oeuvre une procédure adaptée à la situation d'incohérence rencontrée, comme indiqué précédemment).

En procédant de la sorte, le module d'exécution MG assure en permanence la cohérence du contenu de la base de contacts BC vis-à-vis des éléments de contact réactifs au système de téléphonie sur IP. En outre, dans le cas d'un compteur, le module d'exécution MG assure la mise à jour de certaines informations du système de téléphonie sur IP.

On notera que les opérations présentées ci-avant (comparaison d'une date en cours à une date d'échéance, comparaison de seuil, mise à jour de valeurs de certains attributs dans la base de contacts BC et mise à jour de certaines informations du système de téléphonie sur IP) peuvent être sous-traitées par le module d'exécution MG à un module dédié additionnel (non représenté), comme par exemple un contrôleur.

Le résultat de l'application d'un prédicat conditionne le choix du prédicat suivant à appliquer étant donné que les prédicats constituent des noeuds d'une arborescence. Parcourir une arborescence n'implique donc pas que tous les noeuds (ou prédicats) de cette arborescence ont été appliqués. Cela signifie simplement que l'on aboutit forcément à un certain moment à une unique feuille de l'arborescence, qui fournit la décision de routage attendue pour l'appel (reçu ou émis).

Lorsque le module d'exécution MG a déterminé une décision de routage, il la communique à son serveur d'applications SA, afin qu'il la transmette au serveur de signalisation SS.

Comme cela est illustré à titre d'exemple non limitatif sur l'unique figure, le dispositif d'interconnexion D peut comprendre un module de vérification MV chargé de vérifier la cohérence des données de politique (qui sont stockées dans la mémoire MY du serveur d'applications SA et qui représentent les politiques de routage que ce dernier doit mettre en oeuvre) par rapport aux données d'élément qui sont stockées dans la base de contacts BC.

Chaque incohérence interdit en effet de parcourir complètement un ou plusieurs chemins (ou branches) au sein d'une arborescence, et doit donc être signalée afin qu'elle puisse être prise en compte, par exemple au moyen d'une modification d'une partie des prédicats de l'arborescence concernée. Le module de vérification MV est donc chargé de générer une alarme chaque fois qu'il détecte une incohérence. Cette alarme décrit de préférence l'incohérence rencontrée et désigne le prédicat concerné.

Le module de vérification MV est préférentiellement couplé à la base de contacts BC et à la mémoire MY du serveur d'applications SA, via le module d'adaptation MA. Ce dernier permet l'utilisation d'un module de vérification de type outil de vérification automatique, tel qu'un démonstrateur de théorèmes ou un vérificateur de modèles, par exemple du type TLC (pour « Temporal Logic Checker ») ou «Isabelle » qui utilisent des spécifications écrites en TLA (pour « Temporal Logic of Actions »), ou « B » ou encore « Coq ». Il est non seulement chargé de transformer les données de politique (qui représentent l'arborescence à parcourir et qui sont stockées dans la mémoire MY du serveur d'applications SA) en données dites secondaires compatibles avec le format prédéfini des données d'élément (qui sont stockées dans la base de contacts BC), mais également de transformer les données de la base de contacts BC en données secondaires compatibles avec le format prédéfini, afin que le module de vérification MV puisse vérifier une politique et les paramètres associés.

Le module de vérification MV peut effectuer ses vérifications de cohérence de façon périodique, ou bien à la demande d'une personne habilitée, ou encore chaque fois que le module d'exécution MG détecte une incohérence interdisant l'application d'un prédicat. Comme évoqué précédemment, la stratégie de vérification mise en oeuvre par le module de vérification MV pouvant s'avérer inadéquate (par exemple du fait d'une fréquence de vérification insuffisante), le module d'exécution MG peut éventuellement mettre en oeuvre une stratégie « de recouvrement » en cas de prédicat inapplicable, afin, par exemple, de router l'appel vers le standard téléphonique de l'entreprise ou vers une messagerie.

Les vérifications de cohérence peuvent porter sur au moins trois types de propriétés : logiques, unitaires et compositionnelles.

Les vérifications de cohérence des propriétés logiques visent à assurer la cohérence des conditions de routage d'appels, indépendamment des paramètres de traitement d'appels. Par exemple, cela consiste à vérifier qu'il n'y a pas deux redirections vers la même personne dans une même branche d'exécution.

Les vérifications de cohérence des propriétés unitaires visent à vérifier qu'au moins un contact correspond à la condition d'une décision de routage. Par exemple, cela consiste à vérifier que si un test (ou prédicat) concerne les membres (contacts) d'un groupe G, il existe dans la base de contacts BC au moins un contact appartenant à ce groupe G. Dans la négative, la branche d'exécution qui correspond au succès du test ne peut jamais être parcourue intégralement.

Les vérifications de cohérence des propriétés compositionnelles visent à vérifier qu'au moins un contact correspond à la combinaison des conditions aboutissant à une décision de routage. Par exemple, cela consiste à vérifier, lorsqu'un test (ou prédicat) concerne les membres (contacts) d'un groupe H, puis qu'un test (ou prédicat) suivant (dans l'arborescence) cherche à savoir si l'appelant est Monsieur X, si Monsieur X appartient effectivement au groupe H dans la base de contacts BC. Dans la négative, la branche d'exécution qui correspond au succès du test ne peut jamais être parcourue intégralement.

Une liste de propriétés à vérifier, purement illustrative et donc non exhaustive, est donnée ci-dessous à titre d'exemple :
- « tous les chemins de l'arbre décisionnel sont exécutables en fonction du contenu de la base de contacts BC »,
- « si l'appel est rejeté alors plus aucune action de signalisation ne peut avoir lieu »,
- « pour chaque appel (chemin d'exécution) au moins une action de signalisation doit avoir lieu »,
- « un appel doit être transmis ou redirigé vers un contact P au plus une fois par chemin d'exécution »,
- « une fois l'appel transmis ou redirigé, aucune autre action de signalisation ne doit avoir lieu tant que le résultat n'est pas négatif »,
- « si, d'après les différents tests, l'appelant s'avère être le contact P, alors l'appel ne doit pas être redirigé vers P ».

Pour une raison de simplification, les exemples de propriétés à vérifier fournis ci-avant ne concernent que la notion de groupe. Mais, bien entendu, les propriétés à vérifier concernent également les caractéristiques des contacts, c'est-à-dire leurs attributs. Ces derniers peuvent être de tout type, comme par exemple la langue parlée par le contact ou la notification d'un contrat en cours et le numéro de contrat correspondant.

Le dispositif d'interconnexion D selon l'invention, et notamment son module d'exécution MG et sa base de contacts BC, ainsi que ses éventuels module de vérification MV, module de conversion MCi, module de traitement MT, mémoire ME et interface IE, peuvent être réalisés sous la forme de circuits électroniques, de modules logiciels (ou informatiques), ou d'une combinaison de circuits et de logiciels.

Le dispositif d'interconnexion D pourrait éventuellement constituer un (ou faire partie d'un) EAI (« Enterprise Application Integration » - Intégration d'applications d'entreprise). Il est rappelé que le but des EAIs est d'assurer une interopérabilité et l'organisation de la circulation de l'information entre applications hétérogènes (c'est-à-dire faire communiquer des applications constituant tout ou partie du système d'informations d'une entreprise, voire celles de clients et/ou de partenaires et/ou de fournisseurs).

Grâce à l'invention, le système de téléphonie sur IP intègre un dispositif permettant de garantir en permanence au processus de routage d'appels que les données d'information sont mises à jour. Par ailleurs, grâce à un interfaçage minimal intégré dans l'environnement d'exécution, l'invention permet un important gain en performance. En effet, elle évite au(x) système(s) d'informations de l'entreprise d'avoir à gérer les données d'information qui sont réactives au système de téléphonie sur IP, et donc d'être en permanence synchrone avec le processus de routage d'appels. En outre, la vérification de cohérence, offerte par l'invention, permet de signaler toute incohérence entre le contenu de la base de contacts et les politiques de routage, consécutivement à une mise à jour.

L'invention ne se limite pas aux modes de réalisation de dispositif d'interconnexion, de serveur d'applications et de plateforme de téléphonie sur IP décrits ci-avant, seulement à titre d'exemple, mais elle englobe toutes les variantes que pourra envisager l'homme de l'art dans le cadre des revendications ci-après.

## Revendications

1. Dispositif (D) d'interconnexion entre au moins un système d'informations d'entreprise(s) (SI) et un serveur d'applications (SA) stockant des données de politique représentatives d'au moins une politique de routage agencée sous la forme d'une arborescence dont chaque noeud est un prédicat visant au moins une caractéristique d'un appel ou au moins un élément relatif à un contact, et dont chaque feuille terminale est une décision de routage d'un appel visant au moins un contact, et appartenant à un système de téléphonie sur IP comprenant en outre un serveur de signalisation (SS), **caractérisé en ce qu'**il comprend :
- une base de contacts (BC) propre à stocker des données extraites dudit système d'informations (SI) et représentatives d'une liste de contacts associés chacun à au moins un identifiant de contact et au moins un paramètre de contact, chaque identifiant et chaque paramètre constituant un élément d'un contact,
- des moyens de gestion (MG) agencés, en cas de sollicitation par ledit serveur d'applications (SA) au moyen d'un identifiant de contact désigné par un appel, pour parcourir une arborescence d'une politique de routage dudit serveur d'applications (SA) en appliquant successivement ses prédicats compte tenu des éléments dont les données sont stockées dans ladite base de contacts (BC) et d'informations propres au système de téléphonie sur IP, jusqu'à trouver, pour ledit serveur de signalisation (SS), une décision de routage pour ledit appel.

2. Dispositif selon la revendication 1, **caractérisé en ce qu'**il comprend des moyens de conversion (MC) agencés pour convertir des données d'information, relatives auxdits contacts et issues dudit système d'informations (SI), en données d'élément propres à être stockées dans ladite base de contacts (BC).

3. Dispositif selon l'une des revendications 1 et 2, **caractérisé en ce qu'**il comprend des moyens d'adaptation (MA) agencés pour transformer les données de politique représentant ladite arborescence à parcourir en données secondaires selon un format correspondant au format desdites données d'élément.

4. Dispositif selon l'une des revendications 1 à 3, **caractérisé en ce qu'**il comprend des moyens de vérification (MV) agencés pour vérifier la cohérence desdites données de politique par rapport auxdites données d'élément qui sont stockées dans ladite base de contacts (BC), et pour générer une alarme en cas de détection d'une incohérence.

5. Dispositif selon l'une des revendications 1 à 4, **caractérisé en ce que** chaque paramètre est un identifiant d'appartenance à un groupe d'au moins un contact, ou un attribut défini par un identifiant et une valeur.

6. Dispositif selon la revendication 5, **caractérisé en ce que** la valeur de chaque attribut est soit indépendante dudit système de téléphonie sur IP, soit dépendante dudit système de téléphonie sur IP.

7. Dispositif selon la revendication 6, **caractérisé en ce qu'**un attribut à valeur dépendante du système de téléphonie sur IP est en outre associé soit à un compteur, soit à une date d'échéance.

8. Dispositif selon la revendication 7, **caractérisé en ce que** lesdits moyens de gestion (MG) sont agencés, en cas d'application d'un prédicat relatif à un attribut associé à un compteur présentant une valeur en cours définie par une information du système de téléphonie sur IP, pour comparer ladite valeur en cours à un seuil choisi, et soit pour utiliser la valeur dudit attribut et mettre à jour ledit compteur lorsque ladite valeur en cours du compteur est supérieure ou égale audit seuil choisi, soit pour supprimer la valeur dudit attribut dans ladite base de contacts (BC) lorsque ladite valeur en cours du compteur est inférieure audit seuil choisi.

9. Dispositif selon la revendication 7, **caractérisé en ce que** lesdits moyens de gestion (MG) sont agencés, en cas d'application d'un prédicat relatif à un attribut associé à un compteur présentant une valeur en cours définie par une information du système de téléphonie sur IP, pour comparer ladite valeur en cours à un seuil choisi, et soit pour utiliser la valeur dudit attribut et mettre à jour ledit compteur lorsque ladite valeur en cours du compteur est inférieure audit seuil choisi, soit pour supprimer la valeur dudit attribut dans ladite base de contacts (BC) lorsque ladite valeur en cours du compteur est supérieure ou égale audit seuil choisi.

10. Dispositif selon l'une des revendications 7 à 9, **caractérisé en ce que** lesdits moyens de gestion (MG) sont agencés, en cas d'application d'un prédicat relatif à un attribut associé à une date d'échéance définie par une information du système de téléphonie sur IP, pour comparer la date en cours à ladite date d'échéance, et soit pour utiliser la valeur dudit attribut lorsque ladite date en cours est antérieure ou égale à ladite date d'échéance, soit pour supprimer la valeur dudit attribut dans ladite base de contacts (BC) lorsque ladite date en cours est postérieure à ladite date d'échéance.

11. Serveur d'applications (SA) pour un système de téléphonie sur IP comprenant en outre un serveur de signalisation (SS), **caractérisé en ce qu'**il comprend un dispositif d'interconnexion (D) selon l'une des revendications précédentes, couplé audit serveur de signalisation (SS).

12. Plateforme de téléphonie sur IP (PT) pour un système de téléphonie sur IP, **caractérisé en ce qu'**il comprend un serveur de signalisation (SS) couplé à un serveur d'applications (SA) selon la revendication 11.

13. Utilisation du dispositif d'interconnexion (D), du serveur d'applications (SA) et de la plateforme de téléphonie sur IP (PT) selon l'une des revendications précédentes pour les services de téléphonie sur IP.
